# EUROPEAN PATENT SPECIFICATION

(11) **EP 0 952 075 B1**
(45) Date of publication and mention of the grant of the patent: **12.11.2003**
(21) Application number: 99108088.8
(22) Date of filing: 23.04.1999
(51) Int. Cl.: B60K 11/08, B62K 11/04, B62M 7/02

(54) **Scooter type vehicle**
Rollerartiges Fahrzeug
Véhicule du type d'un scooter

(30) Priority: 23.04.1998 JP 12956598
(43) Date of publication of application: 27.10.1999
(73) Proprietor: YAMAHA HATSUDOKI KABUSHIKI KAISHA, Iwata-shi Shizuoka-ken (JP)
(72) Inventor: Kuromoto, Toshinori c/oYamaha Hatsudoki K. K., Iwata-shi, Shizuoka-ken (JP)
(74) Representative: Grünecker, Kinkeldey, Stockmair & Schwanhäusser Anwaltssozietät

(56) References cited:
- EP-A- 0 755 819
- JP-A- 8 127 377

## Description

This invention relates to a scooter type vehicle according to the preamble of the independent claim.

The conventional scooter type vehicle is configured such that the so-called unit swinging engine with an engine integrated with a transmission supporting a rear wheel at the rear end, is mounted, at the bottom of the body, to a body frame as a frame member for vertical swinging movement.

However, in such a system, if the engine is of a water-cooled type, location of the radiator is important, that is, the radiator is preferably located in a place such that it can catch a wind easily and occupy a large area. In addition, if the radiator is disposed on the forward side of the head pipe, a problem is raised of longer piping between the engine and the radiator.

A scooter type vehicle having low deck type foot rests with foot rest surfaces between a handle and a seat, and a water-cooled engine at the bottom of a body, and a radiator locating structure with an engine cooling radiator can be taken from prior art document EP O 755 819 A1. In said prior art scooter type vehicle the radiator is located within the front part of the center tunnel of the foot board. Said foot board constitutes foot placing areas below the leg shield, such that the foot rest surfaces are located substantially in a height corresponding to the middle part of the radiator. Said radiator is located within the center tunnel and extends in an upward direction intersecting the plane of the foot rest surface. Said radiator has a width being larger in vertical direction of the vehicle than in its lateral direction. Since in the prior art scooter type vehicle the radiator is restricted to the center tunnel and the effective area of the radiator is provided dose to the longitudinal center plane of the vehicle, cooling wind is covered by the front wheel of the vehicle, such that cooling performance is reduced or complicated cooling wind guiding means have to be provided to ensure sufficient cooling. Said scooter type vehicle is provided with an engine located rearwardly with regard to the radiator and substantially positioned under the seat of the vehicle.

Prior art document JP-A-8127377 A which discloses the preamble of claim 1 teaches a further scooter type vehicle having low deck type foot rests with foot rest surfaces between a handle and a seat. Said foot rest surface is formed as a substantially plane surface extending in lateral direction of the vehicle. Under said foot rest plane surface an engine cooling radiator for a water-cooled engine of the vehicle is provided. Said radiator is provided on one side of the vehicle with regard to a longitudinal center plane of the vehicle. Said engine cooling radiator provided at one side has a width being larger in lateral direction than in vertical direction of the vehicle. The water-cooled engine of the vehicle is located behind said radiator.

In view of the foregoing, it is the objective of this invention to provide a scooter type vehicle having an improved cooling performance.

This objective is solved for a scooter type vehicle having the features of independent claim 1.

In accordance with said scooter type vehicle, a radiator can catch wind easily and occupy a larger area and further the length of the piping between the engine and the radiator can be smaller.

Some embodiments of the present invention will now be described in more detail with reference to the accompanying drawings, in which:
Fig. 1 is a side view of a scooter type vehicle according to an embodiment,
Fig. 2 is a side view of the scooter type vehicle according to the embodiment with the body covers removed,
Fig. 3 is a side view of a scooter type vehicle according to the embodiment, showing a variation of the container box,
Fig. 4 is a schematic plan view illustrating the frames, container box, etc according to the embodiment,
Fig. 5, is a front view of the scooter type vehicle according to the embodiment with covers removed,
Fig. 6 is a schematic plan view illustrating positioning of the air cleaner according to the embodiment,
Fig. 7 is a sectional view taken along line A-A of Fig. 1 according to the embodiment,
Fig. 8 is a schematic drawing illustrating positioning of the engine, fuel tank, rear cushion, etc according to the embodiment, as viewed from the rear of the vehicle,
Fig. 9 is a horizontal sectional view showing the engine and the rear arm, etc according to the embodiment,
Fig. 10 is a sectional view showing the connection of the rear wheel with the left division according to the embodiment, and
Fig. 11 is a schematic drawing illustrating a variation of positioning of the exhaust pipes, etc according to the embodiment.

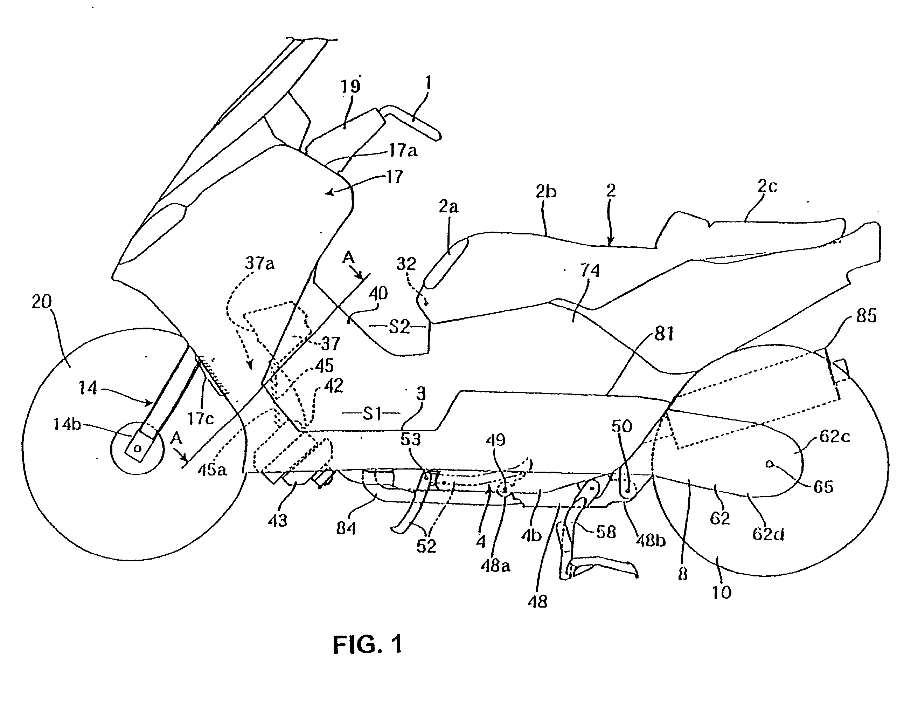

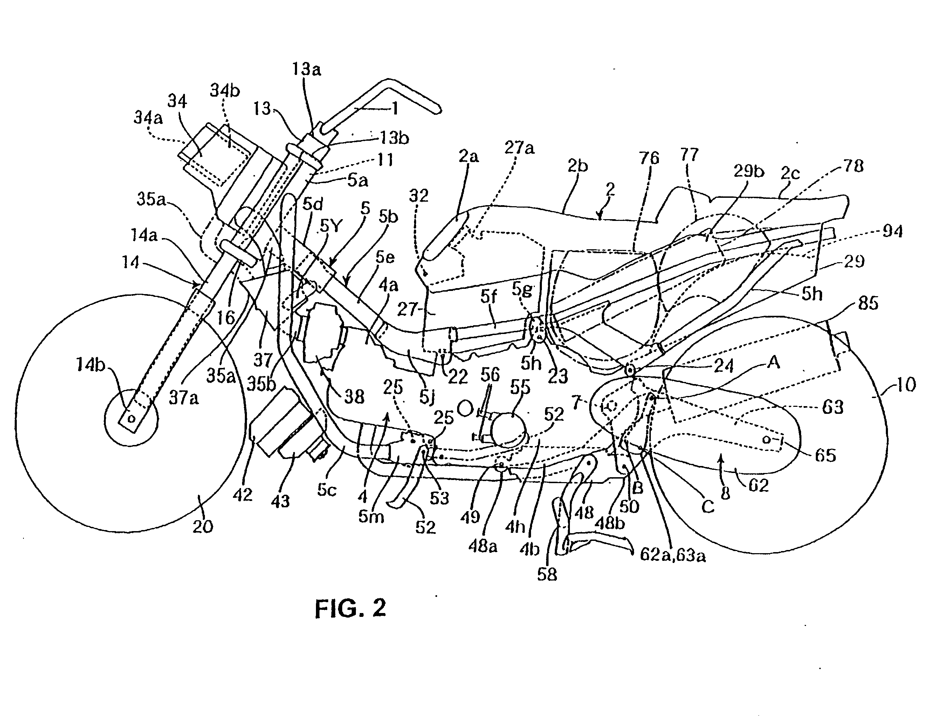

Referring to the construction first, the scooter type vehicle of this embodiment, as shown in Figs. 1 and 2, comprises in general, low deck type main foot rests 3 between a handle 1 and a seat 2, an engine 4 fixed, in the vicinity of the main foot rests 3, to a body frame 5 (hereinafter referred to as "frame 5"), a rear arm 8 disposed at the rear end of the engine 4 for vertical swinging movement through a pivot shaft 7, and a rear wheel 10 supported on the rear arm 8 at the rear end.

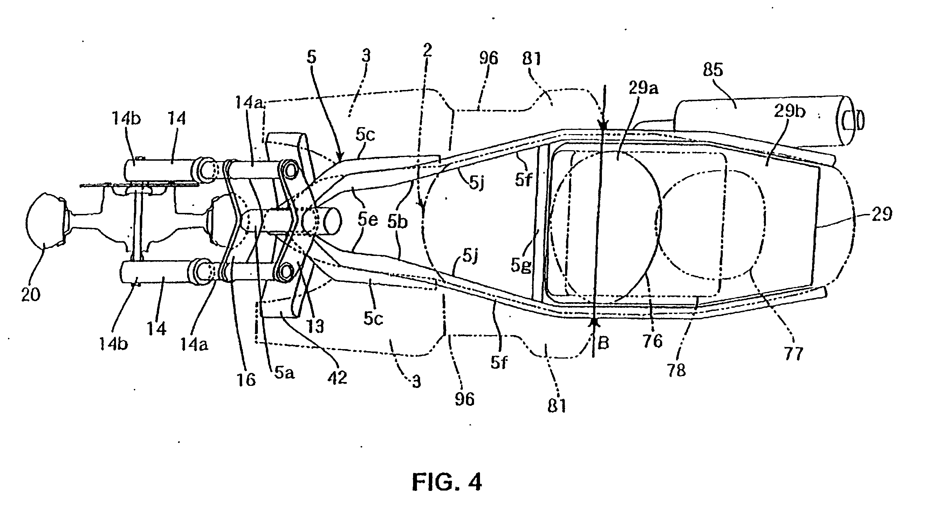

Specifically, between the engine 4 and the rear arm 8 is disposed a rear cushion 48, and the engine 4 is a four-stroke parallel two-cylinder engine with a cylinder section 4a projecting generally horizontally toward the front from a crankcase 4h, as describe later. The frame 5 or a frame member, as shown in Figs. 2 and 4, is provided with a cylindrical head pipe 5a at the front end, and with upper and lower frames 5b, 5c extending toward the rear from the head pipe 5a.

The upper frames 5b comprises a central pipe 5d connected behind the head pipe 5a and extending rearwardly, and a pair of front pipes 5e laterally branched from the rear end of the central pipe 5d and extending rearwardly. Behind the pair of front pipes 5e is provided a box-like section 5j having a pair of press-formed sheet metals coupled together in a wafer-like fashion, through which rear pipes 5f with a smaller diameter than the front pipes 5e extend upwardly toward the rear. In addition, between the pair of rear pipes 5f is connected a laterally extending cross pipe 5g; to the rear pipes 5f are fixed the front ends of a pair of back stays 5h through a box-like bracket 5i formed similar to the box-like section 5j; and the rear ends of the back stays 5h are fixed directly to the rear ends of the rear pipes 5f.

The lower frames 5c are formed in a pair of right and left frames. Numeral 5Y designates a reinforced frame for connecting the central pipe 5d and the pair of lower frames 5c.

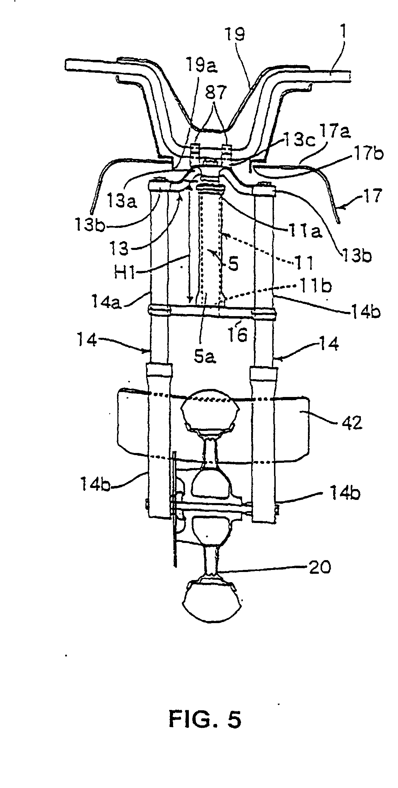

In the head pipe 5a of the frame 5 is inserted a steering shaft 11 of the handle 1 and supported for rotation. The top end 11a of the steering shaft 11 protruding from the head pipe 5a, is connected to a right and left front fork pipes 14 through a crown handle 13, and a bottom end 11b of the steering shaft 11 protruding from the head pipe 5a, is connected to a right and left front fork pipes 14 through an under bracket 16 (see Fig. 5).

The crown handle 13 is die-cast with aluminum alloy (Al) in a bent shape such that the central steering shaft connecting section 13a is higher while the opposite front fork pipe connecting sections 13b are lower, and a upwardly projecting handle holder section 13c is integrated with the steering shaft connecting section 13a.

The upper side of the front fork pipe connecting section 13b is covered by the upper surface of a leg shield 17 or a body cover, and the handle holder section 13c formed in the steering shaft connecting section 13a faces upward from a through hole 17b formed in the upper surface 17a of the leg shield.

On the upper side of the steering shaft connecting section 13a, the handle 1 is held between the handle holder section 13c and a cap holder 87 to be fixed to the crown handle 13, and the handle 1 is covered by a handle cover 19, of which the cylindrical lower section 19a is inserted to the through hole 17b of the leg shield 17 for rotation.

The leg shield 17 covers the surrounding area over the head pipe 5 and fork pipes 14.

The front fork pipes 14 are of a telescopic type; an upper inner tube 14a is inserted to a lower outer tube 14b for axial sliding movement and biased upwardly by a spring (not shown); and a front wheel 20 is supported on the bottom of the outer tube 14b.

Thus, the crown handle 13 is formed in a bent shape such that the central steering shaft connecting section 13a is higher while the opposite front fork pipe connecting sections 13b are lower, therefore if the height of the steering shaft connecting section 13 is the same as that of the conventional type, the front fork pipe connecting sections 13b are lowered by the corresponding amount, that is, the position of the upper surface 17a of the leg shield 17 covering the upper side of the front fork pipe connecting sections 13b can be lowered, thus providing a smaller leg shield 17.

Further, the upper side of the crown handle 13 is covered by the upper surface 17a of the leg shield 17 and only the steering shaft connecting section 13a of the crown handle 13 is raised of its height and faces upward from the through hole 17b of the leg shield 17, so that the through hole 17b can be smaller, providing a smaller handle cover 19 closing the through hole 17b.

Furthermore, the crown handle 13 is raised of its height at the central steering shaft connecting section 13a and the vertical dimension H1 of the head pipe 5a can be secured, so that supporting rigidity of the steering shaft 11 imparted by the head pipe 5a can be increased, thus providing improved running performance.

And further, if a telescopic type front fork pipes 14 are employed, as in this embodiment, which extend up to the top edge of the head pipe 5a and are connected to each other, on the upper and lower side and at the right and left side, this structure, in corporation with the improved supporting rigidity of the above described steering shaft 11, can be applied to a vehicle with large piston displacement.

It is to be understood that in this embodiment, the bottom link type telescopic front forks may be applied.

On the other hand, as shown in Fig. 2, the top of the engine 4 is fixed, at the crankcase 4h, to the box-like section 5j between the front pipes 5e and the rear pipes 5f, brackets 5k fixed to the opposite ends of the cross pipe 5g of the rear pipes 5f, and box-like brackets 5i at the bottom of the back stays 5h, with bolts 22, and 23 and 24 of lengths spanning the spaces between the right and left front pipes 5e and between the right and left rear pipes 5f, respectively. Also, rear ends of the pair of lower frames 5c are press-formed in a flat shape, and fixed respectively to plate-like brackets 5m, to which is bolted the front lower section of the crankcase 4h of the engine 4, with bolts 25.

Upwardly of the engine 4 are disposed a fuel tank 27 supported on the frame 5 and a container box 29, and upwardly of these components is provided the seat 2 for pivotal movement about a hinge 32 at the front end.

As a result of the engine 4 mounted to the frame 5 as described above, the engine acts as a frame member and the corresponding frame pipes can be eliminated, thus providing a smaller body as well as weight saving. In addition, the lower frames 5c can be shorter and the weighty engine 4 can be disposed at a lower position, thus providing a lower center of gravity of the vehicle.

Further, since the box-like section 5j and box-like brackets 5i are utilized, the connection of the engine 4 can be formed easily.

Since, in addition to the rear cushion 48 being disposed between the engine 4 and the rear arm 8, large load transmitted from the wheels 10, 20 is transmitted between the rear arm 8, engine 4, and frame 5 in front of the engine 4 and not transmitted to the rear pipe 5f side, thus the diameter of the rear pipes 5f can be smaller, thereby providing a larger fuel tank 27 or container box 29.

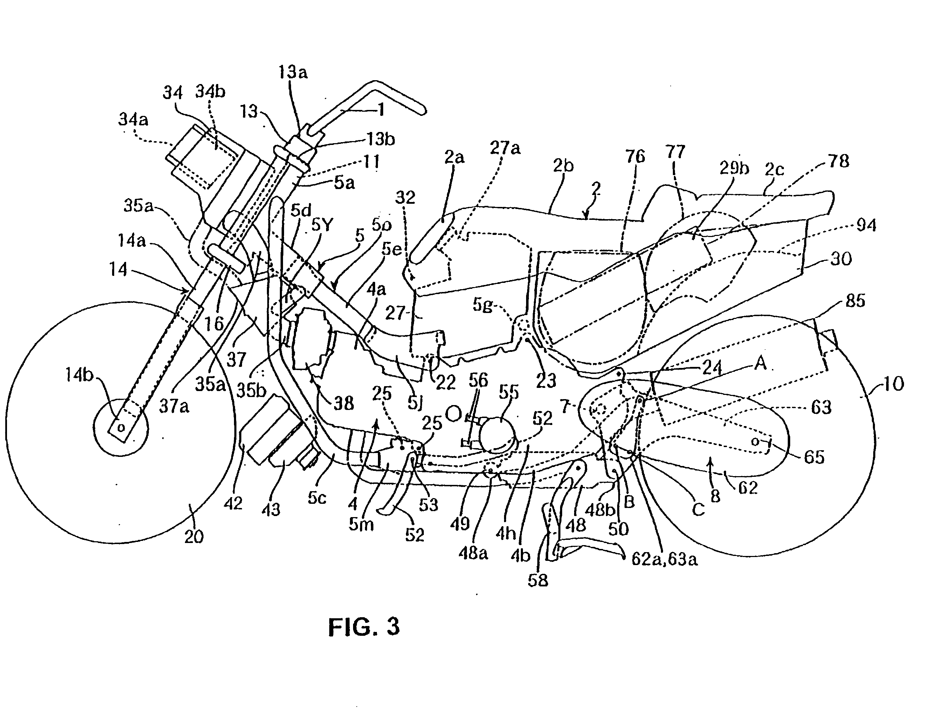

In addition, although in this embodiment, the rear pipes 5f of the upper frames 5b and back stays 5h, etc are provided rearwardly of the engine 4, if a aluminum die-cast or sheet metal press-formed container box 30, as shown in Fig. 3, is instead fixed to the engine with bolts 23, 24, the rear pipes 5f and the back stays 5h, etc can be eliminated. As a result, the frames at the rear of the body are unnecessary, thus providing a yet larger container box 30.

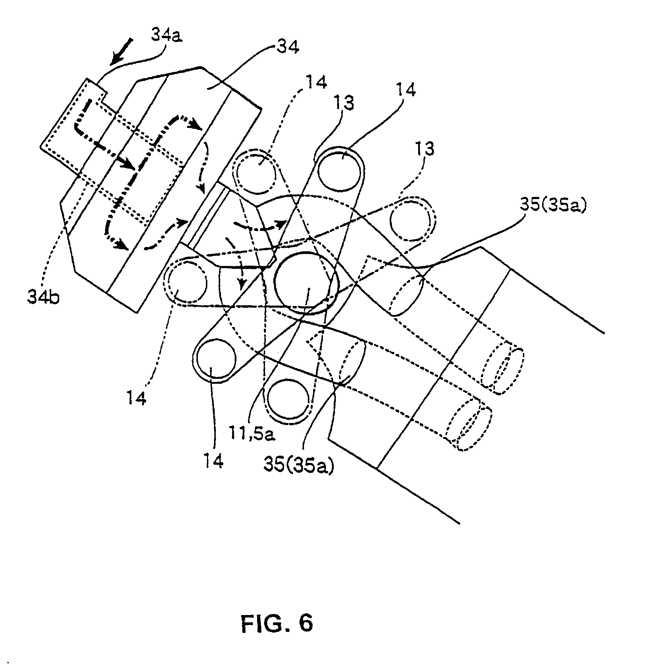

On the other hand, as shown in Figs. 2 and 6, in front of the head pipe 5a of the frame 5 is disposed an air cleaner 34 fixed to the head pipe 5a, and the air cleaner 34 is connected to the engine 4 through an intake air duct 35.

More specifically, the air cleaner 34 is fixed to the head pipe 5a, and arranged of its shape and position such that it doesn't interfere with the front fork pipes 14 when the they are rotated as shown by the double dot and dash line in Fig. 6. In addition, the air intake duct 35 comprises a pair of first air intake ducts 35a and a pair of second air intake ducts 35b, and between these first and second air intake ducts 35a, 35b is disposed an intake air chamber 37, The first air intake ducts 35a extend rearwardly from the air cleaner 34, and as shown in Figs. 2 and 6, run through the space between the head pipe 5a and the front fork pipes 14 to be connected to the intake air chamber 37 with a given volume. The intake air chamber 37 is fixed to the frame 5, and the second air intake ducts 35b also extend from the intake air chamber 37 to be connected to a pair of carburettors 38, which are connected to the engine 4.

Numeral 34a designates an air inlet of the air cleaner 34, and numeral 34b a cylindrical element disposed in the air cleaner 34. Outside air drawn from the air inlet 34a passes through the cylindrical element 34b, then branched into a pair of first air intake ducts 35a, joined together at the intake air chamber 37, and then branched again to the respective carburattors 38 through a pair of second air intake ducts 35b.

In the vehicle in which an engine 4 is provided, with its cylinder section 4a protruded generally horizontally toward the front, in the vicinity of the main foot rests 3 disposed downwardly and in front of the seat 2 as described above, if an air cleaner 34 of a relatively large volume is disposed around there, the foot rest space S1 and foot passing space S2 become small, but if the air cleaner 34 is disposed on the forward side of the head pipe 5a, larger foot rest and foot passing spaces S1 and S2 can be secured.

In addition, if the air cleaner 34 is disposed on the forward side of the head pipe 5a, and the air cleaner 34 and the rearwardly disposed engine 4 are connected by air intake ducts 35 with a relatively small diameter, interference between the intake air system and the steering system can be avoided.

Further, if the air cleaner 34 is disposed on the forward side of the head pipe 5a, the air cleaner 34 can be larger in its volume than when it is disposed in the vicinity of the main foot rests 3, and outside air can be inducted directly to the air cleaner 34 without need for interposing ducts, thus providing utilization of ram air.

Since the air cleaner 34 is disposed at a relatively high position, it is free from the dust or mud spread or splashed by the front wheel 20, thus providing fresh air.

In addition, an intake air chamber 37 with a given volume is disposed in the middle of the air intake ducts 35, so that intake air surge on the engine 4 side is inhibited, providing improved engine performance.

Although, in this embodiment the air intake ducts 35 run through the space between the head pipe 5a and the front fork pipes 14, it may pass through the space between the right and left front fork pipes 14 to be connected to the engine 4, as shown by the double dot and dash line in Fig. 2.

On the other hand, this engine 4 is of a water-cooled type; at both sides of this engine are provided right and left main foot rests 3; and between this main foot rests 3 is provided a center cover 40 protruded upwardly between the two main foot rests 3 and extending longitudinally in a tunnel-like fashion. Under the foot rest surfaces of the main foot rests 3 is disposed a radiator 42 between the front wheel 20 and the engine 4. The radiator 42 takes a flat rectangular shape, disposed with its longitudinal axis in the lateral direction of the vehicle, bent such that its central section is located further rearward, and fixed to the frame 5, somewhat inclined rearwardly so as to face obliquely in an upward direction. Also, this radiator 42 is a type that has tanks on both sides of the core section. Behind the radiator 42 is disposed a fan 43 for inducing outside air to the radiator 42.

Further, within the center cover 40 is disposed a cylinder section 4a of the engine 4, which is disposed upwardly of the radiator 42.

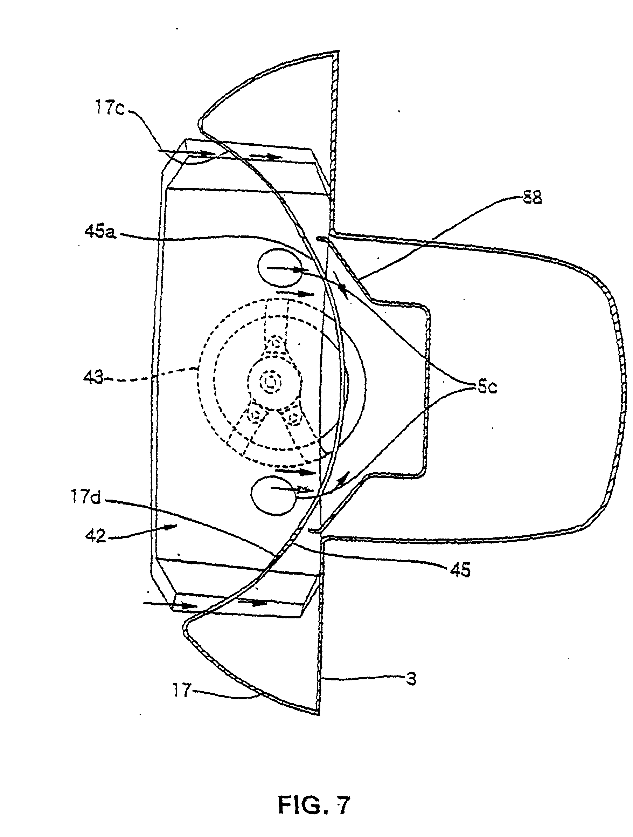

In addition, as shown in Figs. 1 and 7, on both sides of the radiator 42, the bottom of the leg shield 17 is extended, and in the lower central section of the leg shield, viewed from the front of the vehicle, is provided an inner panel 45 detachablly. The leg shield 17 is configured to avoid interference with the front wheel such that both its lateral ends are located further forward than the central section; inside the ends are formed a louvers 17c; and a running wind is induced from the louvers 17c to be sent to the sides of the radiator 42, as shown by arrows in Fig. 7. The inner panel 45 is provided, for detachment, in an opening 17d of the leg shield; the cylinder section 4a of the engine 4 faces this opening 17d; the inner panel 45 is formed with a louver 45a; and a running wind or outside air sent by a fan 43 is induced from the louver 45a to the radiator with the help of a guide plate 88 fixed to the inner panel 45, to be sent to the radiator 42 as shown by arrows in Fig. 7.

The top edge of the inner panel 45 is joined smoothly to the lower surface, of the intake air chamber 37, rearwardly inclined toward the bottom.

In this way, since the radiator 42 is located below the surface of the main foot rests 3, the radiator 42 can be formed wide, extending even to the regions beneath the right and left main foot rests 3, so that the radiator 42 can be larger in its area than when it is located within the center cover 40.

Further, since the radiator 42 is located below the surface of the main foot rests 3, the engine 4 and the radiator 42 can be disposed closer, so that piping between the engine 4 and the radiator 42 can be shorter than when the radiator 42 is located on the forward side of the head pipe 5a.

Furthermore, since louvers 45a, 17c axe formed in the inner panel 45 and the right and left front sides of the leg shield 17, outside air can be induced from the wind holes of these louvers 45a, 17c, thus providing improved cooling capacity. In addition, the intake air chamber 37 is disposed under the central pipe 5d immediately behind the head pipe 5a, and by using the lower surface 37a as part of a wind plate, a running wind passing through the space over the inner panel 45 is induced downwardly with the help of the lower surface 37a through the louver 45a of the inner panel 45 to the inside, thus providing further improvement of the cooling capacity of the radiator 42 and engine 4.

Moreover, if the cylinder section 4a of the engine 4 is disposed within the upwardly projecting center cover 40 formed in the laterally central area between the two foot rests 3 to be positioned upwardly of the radiator 42, the following benefits can be assumed:

That is, the radiator 42 and the engine cylinder section 4a are offset vertically when viewed from the front of the vehicle, and the air that has exchanged heat through the radiator 42, doesn't blow on the engine cylinder section 4a, thus providing improved cooling capacity.

Further, as a result of the engine cylinder section 4a being located upwardly of the radiator 42, the longitudinal dimension of the vehicle occupied by the whole of the engine 4 and radiator 42, can be shorter as well as the wheel base, and the weighty engine 4 and the radiator 42 can be disposed closer to each other providing mass concentration.

On the other hand, since the inner panel 45 is detachable, if it is removed together with the guide plate 88, maintenance of the engine 4 (eg, plug change, etc) can be performed through the opening 17d of the leg shield 17, providing good maintainability.

Also, the radiator 42 faces obliquely in the upward direction and bent, so that a large banking angle can be secured.

On the other hand, as shown in Fig. 2, under the engine 4 and between the engine 4 and the rear arm 8 is provided a rear cushion 48. The rear cushion 48 is disposed generally horizontally, and attached, at the front end 48a, to the bottom of the engine 4 for pivotal movement about a shaft 49, while at the rear end 48b, to the rear arm 8 for pivotal movement about a shaft 50. The rear cushion 48 is adapted to be subjected to a tensile force by the load from the rear wheel 10.

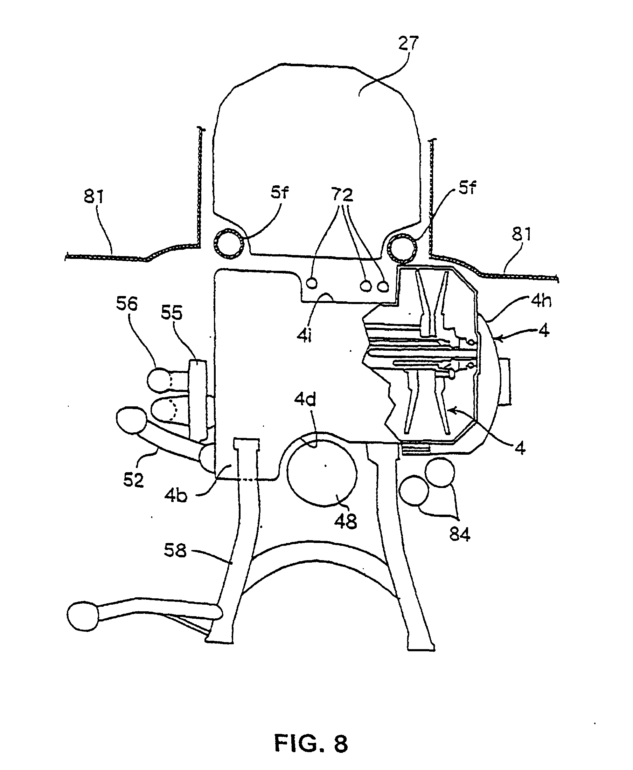

Further, this rear cushion 48, as shown in Fig. 8, is disposed in a recess 4d between an oil pan 4b projecting downwardly of the engine 4 and a dry V-belt type transmission 4c when viewed from the rear of the vehicle.

In this way, the rear arm 8 is mounted to the engine 4 through the pivot shaft 7, and the rear cushion 48 is attached, at the front end 48a, to the engine 4 and at the rear end 48b, to the rear arm 8, therefore the engine 4, rear arm 8, and rear cushion 48 can be arranged as a unit, and the sub-assembly of these components can be assembled on the frame 5, thus providing a easy assembling work.

Further, since the rear cushion 48 is located in a low position, a lower center of gravity is effected, and also, since it is disposed in the downward vicinity of the engine, thus providing mass concentration.

In addition, the rear cushion 48 is disposed laterally centrally of the vehicle, under the engine 4 and generally horizontally in the longitudinal direction, so that an adequate banking angle can be secured, and since it is not disposed in the vertical direction at the rear of the vehicle, as is the conventional rear cushion, space efficiency can be increased at the rear of the vehicle.

Furthermore, the rear cushion 48 is disposed between the oil pan 4b and dry V-belt type transmission 4c, so that space efficiency is improved with adequate ground clearance and a larger banking angle can be secured.

On the other hand, since a side stand 52 is attached, for pivotal movement about a shaft 53, to the brackets 5m fixed to the bottom of the engine 4 at the rear lower end of the lower frames 5c (approximately at the center of gravity), if the side stand 52 is turned and housed in place along a side of the engine 4 approximately horizontally, as shown by the double dot and dash line in Figs. 1 and 2, the auxiliary equipment (water pump 55 and water pipe 56) can be protected during driving or in the event of falling down.

If the water pipe 56 is disposed in parallel to the side stand 52 in a state of housing, protection of the pipe 56 will be further improved.

On the other hand, since the main stand 58 is disposed rearwardly of the center of gravity and on the rearward bottom surface of the engine 4, if the engine 4 is removed from the frame 5 while supported using this main stand 58, the engine 4, rear arm 8, rear wheel 10, rear cushion 48, etc can be supported in one body, thus providing improved assembling property and maintainability of these sub-assembly.

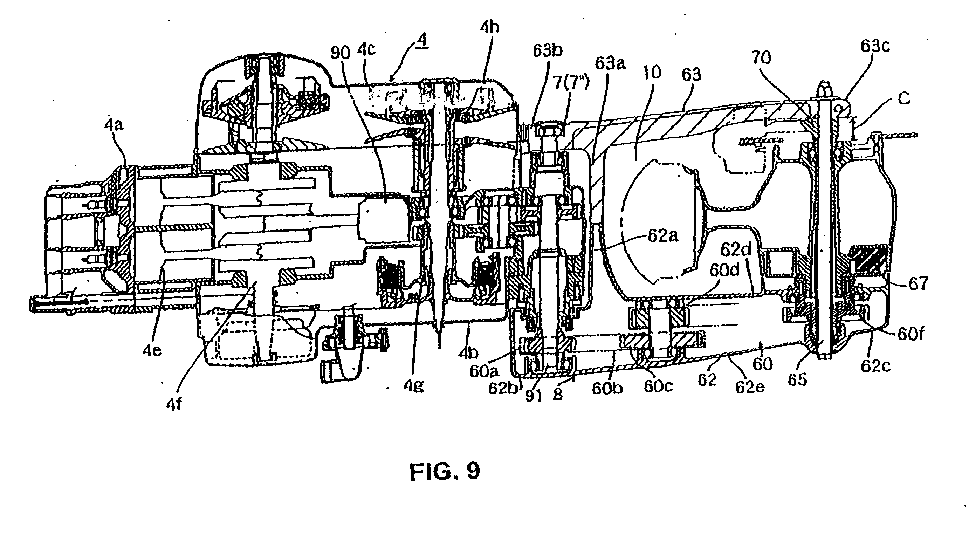

Also, the engine 4, as shown in Fig. 9, is of a water-cooled four-stroke parallel two-cylinder type; drive force from a piston 4e is transmitted through a crankshaft 4f and dry V-belt type transmission 4c to a clutch mechanism 4g, and drive force from the clutch mechanism 4g is transmitted through a reduction gear mechanism to a secondary transmission 60 provided in the rear arm 8. Numeral' 90 designates a balancer.

The rear arm 8, as shown in Fig. 9, is divided into two parts of left and right divisions 62, 63, and mounting bosses 62a, 63a are extended from these divisions 62, 63, respectively, abutted against each other, and fixed by a three point piece (A, B, C) as shown in Fig. 2. The rear cushion 48 is attached to the rear arm such that its rear end 48b is sandwiched between the right and left divisions 63, 62.

The forward ends 62b, 63b of the two divisions 62, 63 are connected to the ends of the pivot shaft 7, respectively, and the rearward ends 62c, 63c to the rear wheel shaft 65.

The pivot shaft 7 is divided into right and left parts, of which a pivot shaft 7' on the left hand side, that is, on the left division 62 side is bolted to the crankcase 4h, and a pivot shaft 7" on the right division 63 side is fixed to the right division 63 and supported on the crankcase 4h for pivotal movement.

The secondary transmission 60 is arranged such that a first sprocket 60a is fixed to an output shaft 91, the first sprocket 60a is connected to a second sprocket 60c through a first silent chain 60b to execute the first stage reduction, a third sprocket 60d, rotatable coaxially with the second sprocket 60c in one body and disposed further inside than the second sprocket 60c, is connected to a fourth sprocket 60f, through a second silent chain 60e to execute the second stage reduction. The left division 62 is configured such that the right half case 62d and the lefb half case 62d are coupled together in a wafer-like fashion, and it is formed in a liquid tight structure, holding oil inside.

In this way, since the engine 4 is fixed on the body side, and in the crankcase 4h of the engine 4 fixed on the body side is disposed a dry V-belt type transmission 4c, the weight on the rear arm 8 side can be lowered, thus providing a decreased unsprung weight.

Also, since the dry V-belt type transmission 4c is provided in the crankcase 4h of the engine 4, and the secondary transmission 60 is provided in the rear arm 8, operation accuracy can be improved without need for power transmission through a long externally exposed chain, and if the secondary transmission 60 is of a wet type, useful life can be extended and frequency of maintenance can be decreased compared with the conventional system.

Further, since the third and fourth sprockets 60d, 60f are disposed further inward than the first and second sprockets 60a, 60c, the left division 62 is arranged such that its external surface can be slanted inwardly toward the rear as shown in Fig. 9, thus securing larger banking angle.

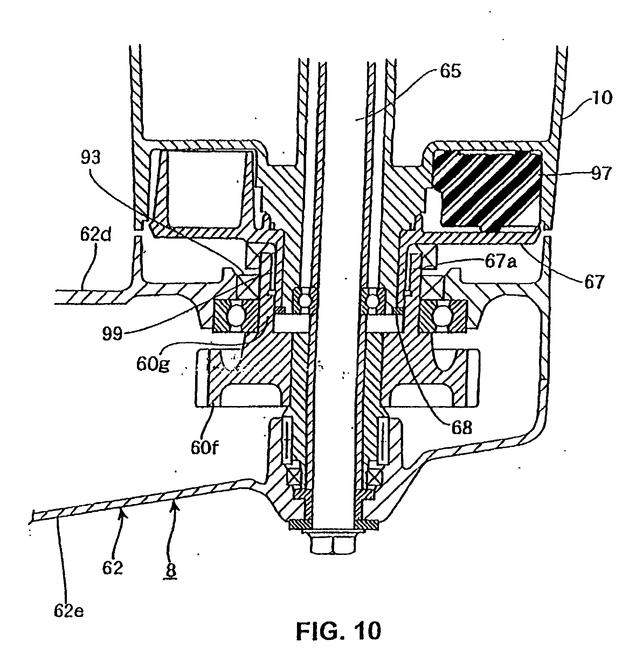

On the other hand, in the fourth sprocket 60f is fitted a rear wheel axle 65, a cylindrical portion 60g is protruded from the fourth sprocket 60f toward the rear wheel 10, and the space between the cylindrical portion 60g and the right case half 62d is sealed with a seal member 93. To the rear wheel 10, as shown mainly in Fig. 10, is fixed, with a slip stopping cir-clip 68, a clutch damper 67 for interposing a damper 97 in the drive force transmission route between the rear wheel 10 and the fourth sprocket 60f, and a spline shaft 67a protruded from the clutch damper 67 is inserted to the fourth sprocket cylindrical portion 60g to be coupled by spline 99. Between the rear wheel 10 and the right division 63 is disposed a brake caliper 70 with a rear wheel axle 65 fitted therein.

The rear wheel 10 and the clutch damper 67 are integrated together by the cir-clip 68, with the damper 97 compressed intensively.

According to such a construction, if the rear wheel axle 65 is pulled out, the caliper 70 is removed, a gap (allowance for removal) is generated between the rear wheel 10 and the rear arm right division 63, and if the rear wheel 10 is moved toward the right division 63 side, spline 99 coupling between the fourth sprocket 60f and the clutch damper 67 can be easily disconnected. These unit can be attached/detached without separating the clutch damper 67 from rear wheel 10 (as described above, a great deal of labor is required to couple these two components) and only a simple operation is needed such as disconnecting the spline 99 coupling, so that tire change of the rear wheel 10 can be performed easily, and since it is not necessary to remove the fourth sprocket 60f, etc of the secondary transmission 60 side, installation/removal of the chain 60e is unnecessary, thus providing a great improvement in maintainability. Especially, since the secondary transmission 60 in the rear arm left division 62 is of a wet type, such elimination of dismantling the secondary transmission 60 is very effective.

Even if disconnection of the spline 99 coupling is difficult, separation of the clutch damper 67 from the rear wheel 10 is prevented by the cir-clip 68.

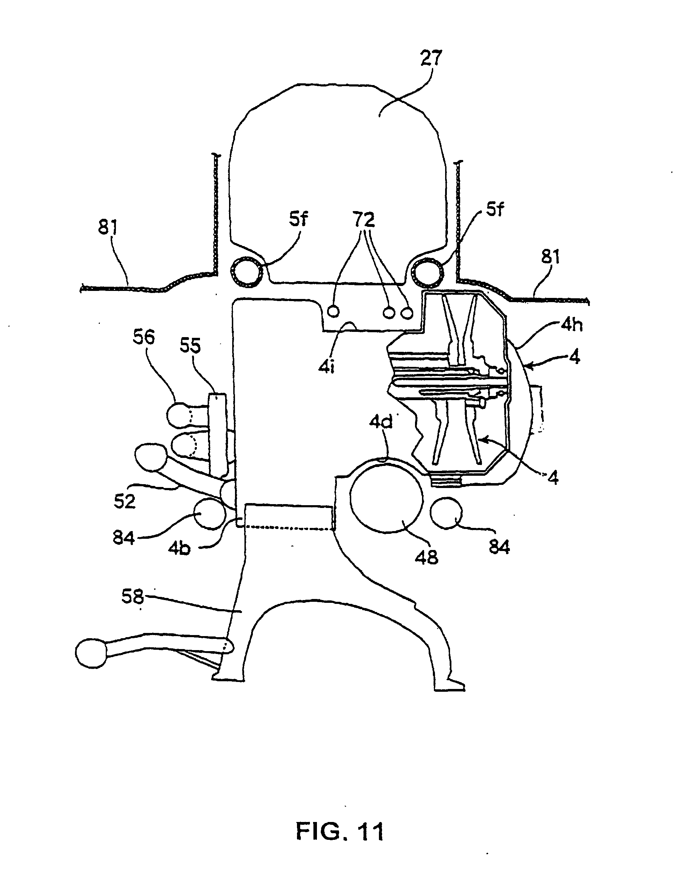

Here, the engine 4 is of a parallel two-cylinder type, and two exhaust pipes 84 extending rearwardly from the cylinder section 4a, as shown in Fig. 8, run through along the right side of the rear cushion 48 and connected to a muffler 85 disposed at the right side of the rear wheel 10, when viewed from the rear. It is to be understood that the two exhaust pipes 84 may be put together into one pipe , or they may be separated to the right and left and connected to mufflers 85 disposed at the right and left sides. In the embodiment shown in Fig. 11, the main stand 58 and the rear cushion 48 are disposed separate from each other to the left and right sides.

On the other hand, as shown in Figs. 2 and 4, upwardly of the engine 4 is disposed a fuel tank 27 supported between a pair of rear pipes 5f, and behind this fuel tank 27 is disposed the container box 29 supported between the pair of rear pipes 5f and the back stays 5h.

The fuel tank 27 is provided, at the top, with an oil port 27a, and when a lid 2a of the seat 2 is opened, oil can be pumped in from the oil port 27a.

In addition, as shown in Fig. 8, on the top of the engine 4 under the fuel tank 27 is formed a recess 4i between the dry V-belt transmission 4c and the clutch mechanism 4g, in the space defined by the recess 4i and the fuel tank 27 are inserted wiring 72 including a brake wire, wire harness, etc, and hot air from the engine 4 is discharged toward the rear of the vehicle by a running wind passing through the recess 4i, thus improving heat radiation property.

Further, a weighty fuel tank 27 is disposed upwardly of the engine 4, thus providing mass concentration.

On the other hand, the container box 29, as shown in Fig. 2, is provided with a full-face type helmet housing 29a in a space above the pivot shaft 7 between the engine 4 and the rear wheel 10, and the helmet housing 29a is able to house a helmet 76 for rider upside down with its longitudinal axis in the lateral direction as shown in Fig. 4 and disposed in a position corresponding to the widest portion B in the longitudinal middle of the seat 2. In addition, the container box 29 is arranged such that it extends rearwardly from the helmet housing 29a and a jet type helmet 77 for co-rider can also be housed in this rear housing 29b. Further, during riding, that is, when the helmets 76, 77 are not in the housing, it can also hold a rectangular bag 78 as shown by the double dot and dash line in Figs. 2 and 4.

In addition, the bottom of the rear housing 29b is recessed upwardly at the laterally central portion to form a tire house 94.

In this way, since the space above the pivot shaft 7 is utilized to dispose the helmet housing 29a of the container box 29 so as to lower the position of the helmet housing 29a, thus providing a lower center of gravity as well as lower positioning of the seat 2 disposed on the helmet housing.

Further, the helmet housing 29a of the container box is formed such that it is disposed in a position corresponding to the widest portion B of the seat 2 and able to house a helmet 76 for rider upside down with its longitudinal axis in the lateral direction, thus securing convenience for rider and avoiding a longitudinal size increase of the vehicle body.

On the other hand, the seat 2 comprised a main seat 2b, and a tandem seat 2c with a raised portion at the rear; the main foot rests 3 have spaces where the rider on the main seat 2b rests his feet; and rearwardly of the main foot rests 3 are provided tandem foot rests 81 for co-rider sitting on the tandem seat 2c.

The tandem foot rests 81 are disposed at a higher position than the main foot rests 3, and in a space under the tandem foot rests 81, as shown in Fig. 8, is disposed a wide and vertically thick crankcase 4h of the engine 4.

Numeral 96 designates a cutout for improving grounding property for rider.

In this way, since the position of the main foot rests 3 and tandem foot rests 81 are set in accordance with the configuration of the engine 4, the position of the main foot rests 3 can be lowered compared with when the height of the main foot rests 3 is the same as that of the tandem foot rests 81, thus providing a lower positioning of the main seat 2b and improved grounding property for rider.

Further, the space under the tandem foot rests 81 disposed higher than the main foot rests 3 is utilized to dispose there a wide and vertically thick crankcase 4h of the engine 4, therefore the space can be utilized effectively, and the engine 4 and the tandem foot rests 81 can be disposed in a proper positional relation.

Although a foot rest member for the co-rider is shown as the tandem foot rests 81 formed integral with the main foot rests 3, alternatively to this type of foot rest, it may be of a plate-like separate type or a rod type.

As described above, according to the embodiment since the radiator is located below the surface of the main foot rests, the radiator can be formed wide, extending throughout the lateral width of the foot rests, so that the radiator can be larger in its area than when it is located within the center cover. Further, since the radiator is located below the surface of the main foot rests, the engine and the radiator can be disposed closer, so that piping between the engine and the radiator can be shorter than when the radiator is located on the forward side of the head pipe.

According to another embodiment, in addition to the foregoing effects, if the cylinder section of the engine is disposed within the upwardly projecting center cover formed in the laterally central area between the foot rests, to be positioned upwardly of the radiator, the following benefits can be assumed:

That is, the radiator and the engine cylinder section are offset vertically when viewed from the front of the vehicle, and the air that has exchanged heat through the radiator, doesn't blow on the engine cylinder section, thus providing improved cooling capacity.

Further, as a result of the engine cylinder section being located upwardly of the radiator, the longitudinal dimension of the vehicle body occupied by the whole of the engine and radiator, can be shorter, thus providing a compact body.

Furthermore, the weighty engine and the radiator can be disposed closer to each other, thus producing practically useful effects of providing mass concentration.

## Claims

1. Scooter type vehicle having low deck type foot rests (3) with foot rest surfaces between a handle (1) and a seat (2), and a water-cooled engine (4) at the bottom of a body, and a radiator locating structure with an engine cooling radiator (42), said engine cooling radiator (42) has a width being larger in lateral direction of the vehicle than in its vertical direction and said engine cooling radiator (42) is located below the foot rest surfaces of said foot rests (3), and said engine (4) is fixed to a body frame (5) and is disposed in the vicinity of said foot rests (3), **characterized in that** a center cover (40) is upwardly projecting and longitudinally extending in a tunnel-like fashion and is formed at a laterally central portion of said foot rests (3), and a cylinder section (4a) of said engine (4) is disposed within the center cover (40), and the cylinder section (4a) is positioned upwardly of said radiator (42).

## Patentansprüche

1. Rollerartiges Fahrzeug, das untere plattenartige Fußstützen (3) mit Fußstützenoberflächen zwischen einem Handgriff (1) und einem Sitz (2) hat, und einen wassergekühlten Verbrennungsmotor (4) am Boden einer Karosserie, und einen Kühleranordnungsaufbau mit einem Motor- Kühler (42), wobei der Motor- Kühler (42) eine Breite hat, die in seitlicher Richtung des Fahrzeuges größer als in ihrer vertikalen Richtung ist, und der Motor- Kühler (42) unter den Fußstützenoberflächen der Fußstützen (3) angeordnet ist, und der Motor (4) an einem Karosserierahmen (5) befestigt ist und in der Nähe der Fußstützen (3) angeordnet ist, **dadurch gekennzeichnet, dass** eine Mittelverkleidung (40) aufwärts vorspringend ist und die sich längs in einer tunnelartigen Form erstreckt, und an einem seitlichen, mittleren Abschnitt der Fußstützen (3) gebildet ist, und ein Zylinderabschnitt (4a) des Motors (4) innerhalb der Mittelverkleidung (40) angeordnet ist, und der Zylinderabschnitt (4a) oberhalb des Kühlers (42) angeordnet ist.

## Revendications

1. Véhicule de type scooter comprenant des repose-pieds de type à tablier inférieur (3) comprenant des surfaces de repose-pieds situées entre un guidon (1) et une selle (2), et un moteur à combustion interne à refroidissement par eau (4) disposé à l'embase d'un corps, et une structure de positionnement de radiateur comprenant un radiateur de refroidissement de moteur à combustion interne (42), ledit radiateur de refroidissement de moteur à combustion interne (42) a une largeur qui est plus importante dans la direction latérale du véhicule que dans sa direction verticale, et ledit radiateur de refroidissement de moteur à combustion interne (42) est disposé en-dessous des surfaces de repose-pieds (3), et ledit moteur à combustion interne (4) est fixé sur un corps de châssis (5) et est disposé à proximité desdits repose-pieds (3), **caractérisé en ce qu'**un capot central (40) est en saillie vers le haut et s'étend longitudinalement sous la forme d'un tunnel et est formé sur une partie centrale latérale desdits repose-pieds (3), et qu'une section de cylindre (4a) dudit moteur à combustion interne (4) est disposée à l'intérieur du capot central (40), et que la section de cylindre (4a) a une position dirigée vers le haut dudit radiateur (42).
